# EUROPÄISCHE PATENTSCHRIFT

(11) **EP 3 501 942 B1**
(45) Veröffentlichungstag und Bekanntmachung des Hinweises auf die Patenterteilung: **27.01.2021**
(21) Anmeldenummer: 18208958.1
(22) Anmeldetag: 28.11.2018
(51) Int. Cl.: B62D 1/19, B62D 1/184

(54) **LENKSÄULENBAUGRUPPE**
STEERING COLUMN MODULE
MODULE DE COLONNE DE DIRECTION

(30) Priorität: 18.12.2017 DE 102017130358
(43) Veröffentlichungstag der Anmeldung: 26.06.2019
(73) Patentinhaber: ZF Automotive Germany GmbH, 73553 Alfdorf (DE); TRW Limited, Solihull, West Midlands B90 4AX (GB)
(72) Erfinder: Büker, Richard, 73553 Alfdorf (DE); Karp, Tomasz, 73553 Alfdorf (DE); Ericke, Patrick, 73553 Alfdorf (DE); Krivan, Milos, 73553 Alfdorf (DE); Davies, Niclas, Solihull, West Midlands B90 4AX (GB)
(74) Vertreter: ZF Friedrichshafen AG

(56) Entgegenhaltungen:
- WO-A1-2018/064161
- WO-A1-2018/153773
- DE-B3-102015 204 476
- US-B1- 9 428 215

## Beschreibung

Die Erfindung betrifft eine Lenksäulenbaugruppe für ein Kraftfahrzeug, mit einer Energieabsorptionsvorrichtung, gemäß Oberbegriff des Anspruchs 1.

Diverse Lenksäulenbaugruppen für Kraftfahrzeuge mit einer Energieabsorptionsvorrichtung sind aus dem Stand der Technik bekannt. Im Falle eines Fahrzeugcrashs dämpft die Energieabsorptionsvorrichtung den Aufprall des Fahrers auf das Lenkrad. Dabei verschiebt sich die Lenksäule in axialer Richtung vom Fahrer weg in die Instrumententafel hinein und energieabsorbierende Bauteile, wie zum Beispiel Rollstreifen oder Rollreißstreifen nehmen einen Teil der Energie auf, indem sie sich plastisch verformen.

Lenksäulenbaugruppen mit einer Energieabsorptionsvorrichtung sind insbesondere für Fahrzeuge mit einem Airbag im Lenkrad vorgesehen, die in einigen Ländern ohne Sicherheitsgurt gefahren werden dürfen. Dabei muss die Energieabsorptionsvorrichtung einen wesentlichen Teil der auf den Fahrer wirkenden Kräfte aufnehmen, wenn dieser auf das Lenkrad oder den Airbag aufprallt, um ein Verletzungsrisiko zu minimieren. Wie viel Energie die Energieabsorptionsvorrichtung aufnehmen soll, hängt von mehreren Faktoren ab, insbesondere davon, ob der Fahrer angeschnallt ist.

Die gattungsbildende DE 10 2015 204 476 B2 offenbart ein Lenksystem mit einer Energieabsorptionseinrichtung. Die Energieabsorptionseinrichtung weist zwei Energieabsorptionselemente auf, die sich bei einem Crash plastisch verformen können.

Die WO 2018 / 153 773 A1 offenbart eine Lenksäulenbaugruppe für ein Kraftfahrzeug mit einem Hülsenelement und einer Energieabsorptionseinrichtung. Im Falle eines Crashs verschiebt sich das Hülsenelement und die Energieabsorptionseinrichtung absorbiert einen Teil der beim Crash freiwerdenden Energie.

Aufgabe der Erfindung ist es, eine Lenksäulenbaugruppe mit einer Energieabsorptionsvorrichtung zu schaffen, die je nach Situation das passende Energieabsorptionsverhalten zeigt.

Die Aufgabe wird erfindungsgemäß gelöst durch eine Lenksäulenbaugruppe gemäß Anspruch 1.

Die Lenksäulenbaugruppe umfasst ein fahrzeugfestes Lagerungselement und ein im Lagerungselement aufgenommenes Hülsenelement, das zur Einstellung der Lenksäulenbaugruppe in axialer Richtung in dem Lagerungselement verschiebbar gelagert ist. Die Lenksäulenbaugruppe hat eine Energieabsorptionsvorrichtung, die fest mit dem Lagerungselement koppelbar und mit dem Hülsenelement fest verbunden ist, wobei die Energieabsorptionsvorrichtung im Falle eines Fahrzeugcrashs infolge der Längsverschiebung des Hülsenelements verformt wird und dabei einen Teil der Bewegungsenergie des Hülsenelements absorbiert. Die Lenksäulenbaugruppe umfasst ferner ein Feststellelement, das eine offene und eine geschlossene Stellung aufweist, wobei das Feststellelement in der offenen Stellung eine Verstellung des Hülsenelements erlaubt und es in der geschlossenen Stellung örtlich festlegt. Zudem ist eine Koppelvorrichtung mit einem Koppelelement vorgesehen, die eine gekoppelte Stellung und eine entkoppelte Stellung aufweist. Die Energieabsorptionsvorrichtung umfasst wenigstens ein erstes Absorptionselement und ein zweites Absorptionselement, die jeweils dazu ausgebildet sind, sich bei einem Fahrzeugcrash durch Relativbewegung des Hülsenelements zum Lagerungselement plastisch zu verformen. In der gekoppelten Stellung der Koppelvorrichtung ist das erste Absorptionselement über das Koppelelement fest mit dem zweiten Absorptionselement gekoppelt. Unter "über das Koppelelement fest gekoppelt" ist dabei zu verstehen, dass eine Kraft zwischen den beiden Absorptionselementen über das Koppelelement übertragen wird. Die beiden Absorptionselemente sind dabei nicht zwangsläufig unmittelbar und nur über das Koppelelement miteinander gekoppelt. Es können weitere Bauteile an der Kopplung der beiden Absorptionselemente beteiligt sein. Beispielsweise kann das zweite Absorptionselement über das Koppelelement unmittelbar an ein weiteres Bauteil gekoppelt sein, während das weitere Bauteil wiederum unmittelbar an das erste Absorptionselement gekoppelt ist. In der geschlossenen Stellung des Feststellelements ist wenigstens das erste Absorptionselement fest mit dem Lagerungselement gekoppelt und in der offenen Stellung das Koppelelement in axialer Richtung gemeinsam mit dem Hülsenelement beweglich. Während eines normalen Betriebs des Kraftfahrzeugs befinden sich das Feststellelement in der geschlossenen Stellung und die Koppelvorrichtung in der gekoppelten Stellung. Die beiden Absorptionselemente können jeweils Absorptionsstreifen sein. Insbesondere bestehen sie aus einem Energie absorbierenden Material, beispielsweise aus Metall. Sie können jedoch auch eine andere, geeignete Geometrie aufweisen und/oder aus einem anderen, geeigneten Material oder Verbundmaterial bestehen. Unter "geeignet" ist dabei zu verstehen, dass Geometrie und Materialwahl erlauben, dass die Absorptionselemente bei einer plastischen Verformung Energie absorbieren.

Die Koppelvorrichtung umfasst ein Verstellelement, das eine erste und eine zweite Stellung aufweist, wobei das Verstellelement in der ersten Stellung das Koppelelement in der gekoppelten Stellung hält und in der zweiten Stellung das Koppelelement in der entkoppelten Stellung hält. Anders ausgedrückt ist die Koppelvorrichtung von der gekoppelten Stellung in die entkoppelte Stellung umschaltbar, indem das Verstellelement von der ersten in die zweite Stellung bewegt wird.

Das Verstellelement ist ein Führungsteil, insbesondere eine Keilplatte, das eine als Längsführung ausgebildete Oberseite aufweist, die mit dem Koppelelement in Kontakt ist, und das keilförmigem Ausbuchtungen an einer der Oberseite entgegengesetzten Unterseite aufweist. Insbesondere ist das Koppelelement in axialer Richtung entlang der Oberseite des Führungsteils beweglich, wodurch ein Verstellen des Hülsenelements auch in der gekoppelten Stellung der Koppelvorrichtung möglich ist.

Die erfindungsgemäße Lenksäulenbaugruppe weist also eine Ausgangsstellung auf (Koppelvorrichtung in gekoppelter Stellung und Feststellelement in geschlossener Stellung), in der beide Absorptionselemente mit dem Hülsenelement gekoppelt sind und bei einem Fahrzeugcrash eine erste Energiemenge von den beiden Absorptionselementen gemeinsam absorbiert wird. Zudem weist die Lenksäulenbaugruppe eine weitere Stellung auf (Koppelvorrichtung in entkoppelter Stellung und Feststellelement in geschlossener Stellung), in der nur das erste Absorptionselement mit dem Hülsenelement gekoppelt ist und bei einem Fahrzeugcrash eine zweite Energiemenge vom ersten Absorptionselement absorbiert wird, wobei die zweite Energiemenge geringer ist als die erste Energiemenge. Ist das Feststellelement in der offenen Stellung, so lässt sich das Hülsenelement relativ zum Lagerungselement verstellen, obwohl das zweite Absorptionselement mit dem Hülsenelement gekoppelt ist. Dies wird dadurch gewährleistet, dass das Koppelelement in axialer Richtung des Hülsenelements beweglich ist, solange sich das Feststellelement in der offenen Stellung befindet.

Die Koppelvorrichtung ist dabei derart gestaltet, dass sie basierend auf einer Energieabsorptionsanforderung bei einem Fahrzeugcrash in der gekoppelten Stellung verbleibt oder in die entkoppelte Stellung umschaltet. Unter Energieabsorptionsanforderung ist dabei eine Anforderung zu verstehen, die durch externe Parameter bestimmt ist, beispielsweise dadurch, ob der Fahrer einen Sicherheitsgurt angelegt hat oder nicht. Weitere Parameter können die Masse des Fahrers, die aktuelle Fahrzeuggeschwindigkeit und/oder die Verzögerung bei einem Fahrzeugcrash umfassen. Anders ausgedrückt gibt die Energieabsorptionsanforderung diejenige Menge an Energie an, die bei einem Fahrzeugcrash aufgenommen werden muss, um den Fahrer bestmöglich abzufangen. Ist die Energieabsorptionsanforderung also hoch, so verbleibt die Koppelvorrichtung in der gekoppelten Stellung. Ist die Energieabsorptionsanforderung hingegen relativ niedrig, so schaltet die Koppelvorrichtung in die entkoppelte Stellung um. Beispielsweise können die für die Energieabsorptionsanforderung relevanten Parameter in definierten Abständen, zum Beispiel mit einer Frequenz von 100 Hz, überprüft und die Energieabsorptionsanforderung vor oder während der Fahrt entsprechend angepasst werden. Somit kann der Kopplungszustands der Absorptionselemente zu jeder Zeit an die aktuellen Parameter angepasst werden.

Vorzugsweise ist das Koppelelement eine Zahnstange. Über eine Verzahnung der Zahnstange sind die Absorptionselemente jeweils einfach durch eine passende Gegenverzahnung an die Zahnstange gekoppelt.

Insbesondere weisen/weist das erste und/oder das zweite Absorptionselement eine zur Verzahnung der Zahnstange im Wesentlichen komplementäre Verzahnung auf.

Gemäß einer Ausgestaltung der Erfindung umfasst die Energieabsorptionsvorrichtung wenigstens einen Schiebeblock, der mit dem ersten Absorptionselement fest verbunden ist, wobei der Schiebeblock in der geschlossenen Stellung des Feststellelements fest mit dem Lagerungselement gekoppelt ist und in der offenen Stellung des Feststellelements vom Lagerungselement entkoppelt ist. Zur axialen Verstellung des Hülsenelements wird das Feststellelement in die offene Stellung bewegt und der Schiebeblock ist dann mit dem Hülsenelement in axialer Richtung beweglich. Die Energieabsorptionsvorrichtung kann auch mehrere Schiebeblöcke umfassen, insbesondere wobei für jeden Schiebeblock ein eigenes Feststellelement vorgesehen ist.

Gemäß einer weiteren Ausgestaltung der Erfindung weisen der Schiebeblock und das zweite Absorptionselement jeweils eine zur Verzahnung der Zahnstange im Wesentlichen komplementäre Verzahnung auf. Über die Zahnstange ist das zweite Absorptionselement dann also an den Schiebeblock und damit auch an das erste Absorptionselement fest koppelbar.

Ein Aspekt sieht vor, dass der Schiebeblock in der geschlossenen Stellung des Feststellelements form- und/oder reibschlüssig mit dem Feststellelement verbunden ist. Hierdurch kann eine besonders gute Kopplung zwischen dem Schiebeblock und dem Feststellelement gewährleistet werden, beispielsweise indem der Schiebeblock eine Verzahnung und das Feststellelement eine korrespondierende Verzahnung aufweisen. So ist ein sicheres Verrasten in axialer Richtung gewährleistet. Zudem kann die Verzahnung genutzt werden, um das Hülsenelement in axialer Richtung mittels eines elektrischen Antriebs zu verstellen.

Vorzugsweise umfasst die Koppelvorrichtung ein Verstellelement, das eine erste und eine zweite Stellung aufweist, wobei das Verstellelement in der ersten Stellung das Koppelelement in der gekoppelten Stellung hält und in der zweiten Stellung das Koppelelement in der entkoppelten Stellung hält. Anders ausgedrückt ist die Koppelvorrichtung von der gekoppelten Stellung in die entkoppelte Stellung umschaltbar, indem das Verstellelement von der ersten in die zweite Stellung bewegt wird.

Ein Aspekt sieht vor, dass das Verstellelement und das Koppelelement mittels eines Verbindungsteils derart verbunden sind, dass das Koppelelement in axialer Richtung des Hülsenelements relativ zum Verstellelement beweglich ist, insbesondere wobei das Koppelelement und das Verstellelement in Richtungen senkrecht zur axialen Richtung relativ zueinander unbeweglich sind. Dadurch wird das Koppelelement entlang des Führungsteils stabil geführt und das Koppelelement ist nur in axialer Richtung relativ zum Verstellelement beweglich. Hierdurch ist eine stabile Verbindung zwischen den beiden Absorptionselementen auch während des Verstellens des Hülsenelements gewährleistet.

Das Verbindungsteil kann ein Profilteil mit einem, in axialer Richtung gesehen, im Wesentlichen C-förmigen Querschnitt sein.

Gemäß einem weiteren Aspekt sind Ausnehmungen im Lagerungselement vorgesehen, insbesondere Langlöcher, die derart gestaltet sind, dass sie die keilförmigen Ausbuchtungen des Führungsteils aufnehmen können, wodurch eine Führung erzeugt wird. Dadurch ergeben sich insbesondere zwei verschiedene Stellungen des Führungsteils. In einer ersten Stellung sind die keilförmigen Ausbuchtungen in den Ausnehmungen aufgenommen und in der zweiten Stellung liegen die keilförmigen Ausbuchtungen außerhalb der Ausnehmungen auf dem Lagerungselement auf. Insbesondere sind die erste und die zweite Stellung des Führungsteils derart, dass das Führungsteil in axialer Richtung des Hülsenelements in der ersten Stellung gegenüber der zweiten Stellung abgesenkt ist, und zwar längs der Langlöcher.

Die Ausnehmungen können, in axialer Richtung des Hülsenelement gesehen, schräg angeordnet sein, vorzugsweise jeweils hin zu einem Lenkrad schräg angeordnet. Befinden sich die keilförmigen Ausbuchtungen in den Ausnehmungen und wird das Führungsteil mit einer ausreichenden Kraft in Richtung des Lenkrads beaufschlagt, so gleiten die keilförmigen Ausbuchtungen entlang eines Rands der Ausnehmungen und das Führungsteil wird angehoben. Befinden sich andersherum die keilförmigen Ausbuchtungen außerhalb der Ausnehmungen und wird das Führungsteil mit einer Kraft in Richtung vom Lenkrad weg beaufschlagt, so gleiten die keilförmigen Ausbuchtungen entlang des Rands der Ausnehmungen in die Ausnehmungen hinein und das Führungsteil wird abgesenkt.

Insbesondere sind in der entkoppelten Stellung der Koppelvorrichtung die keilförmigen Ausbuchtungen des Führungsteils in den Ausnehmungen aufgenommen. Durch das Absenken des Führungsteils wird auch das Koppelelement abgesenkt und es gerät außer Eingriff mit der Energieabsorptionsvorrichtung, sodass das zweite Absorptionselement vom ersten Absorptionselement entkoppelt ist. So lässt sich auf einfache Art und Weise die Koppelvorrichtung von der gekoppelten Stellung in die entkoppelte Stellung umschalten.

Vorzugsweise hat die Koppelvorrichtung einen pyrotechnischen und/oder elektrischen Aktuator, der dazu ausgebildet ist, im oder vor dem Crashfall die Koppelvorrichtung von der gekoppelten Stellung in die entkoppelte Stellung zu schalten. Insbesondere schaltet der Aktuator die Koppelvorrichtung in die entkoppelte Stellung, wenn die Energieabsorptionsanforderung, wie weiter oben erläutert, relativ niedrig ist. Ein pyrotechnischer Aktuator hat dabei den Vorteil, dass Umschaltzeiten sehr kurz sind. Ein elektrischer Aktuator hat hingegen den Vorteil, dass er mehrfach verwendbar ist, die Koppelvorrichtung also mehrfach zwischen der gekoppelten und der entkoppelten Stellung umschalten kann.

Weiter bevorzugt weist der Aktuator ein verschiebbares, z. B. einziehbares Halteteil auf, wobei das Lagerungselement eine Ausnehmung hat, die das Halteteil aufnehmen kann, insbesondere wobei das Halteteil in einer ausgefahrenen Stellung das Verstellelement in der ersten Stellung hält, und wobei der Aktuator dazu ausgebildet ist, das Halteteil im oder vordem Crashfall einzuziehen. Dabei kann eine Stirnseite des Verstellelements an dem Halteteil anliegen. Die Koppelvorrichtung lässt sich so besonders schnell zwischen der gekoppelten und der entkoppelten Stellung umschalten.

Insbesondere ist das Halteteil innerhalb der Ausnehmung beweglich, z. B. auch in der axialen Richtung. Das Halteteil bestimmt dadurch die axiale Position des Verstellelements. Der Aktuator ist beispielsweise mit einer Schraube am Lagerungselement fixiert, wodurch die axiale Position des Verstellelements festgesetzt ist, solange das Halteteil ausgefahren ist.

In einer bevorzugten Ausführungsform ist ein Federelement vorgesehen, das die Koppelvorrichtung hin zur entkoppelten Stellung beaufschlagt. Dadurch ist keine externe Kraft notwendig, um die Koppelvorrichtung von der gekoppelten in die entkoppelte Stellung umzuschalten.

Weitere Vorteile und Eigenschaften der Erfindung ergeben sich aus der nachfolgenden Beschreibung und den Zeichnungen, auf die Bezug genommen wird. In diesen zeigen:
- Fig. 1 eine perspektivische Ansicht einer erfindungsgemäßen Lenksäulenbaugruppe;
- Fig. 2 eine Seitenansicht eines Details der erfindungsgemäßen Lenksäulenbaugruppe von Figur 1;
- Fig. 3 (a) und (b) eine Frontansicht bzw. eine perspektivische Ansicht eines Details der erfindungsgemäßen Lenksäulenbaugruppe von Figur 1 in einer gekoppelten Stellung;
- Fig. 4 (a) und (b) eine Frontansicht bzw. eine perspektivische Ansicht des Details von Figur 3 in einer entkoppelten Stellung;
- Fig. 5 eine weitere perspektivische Ansicht der erfindungsgemäßen Lenksäulenbaugruppe von Figur 1 in einer entkoppelten Stellung;
- Fig. 6 eine Seitenansicht der erfindungsgemäßen Lenksäulenbaugruppe von Figur 1;
- Fig. 7 eine Seitenansicht eines Lagerungselements der erfindungsgemäßen Lenksäulenbaugruppe von Figur 1;
- Fig. 8 eine Seitenansicht des Details von Figur 2 der erfindungsgemäßen Lenksäulenbaugruppe von Figur 1 in der entkoppelten Stellung; und
- Fig. 9 (a) bis (c) eine Detailansicht einer Koppelvorrichtung der erfindungsgemäßen Lenksäulenbaugruppe von Figur 1.

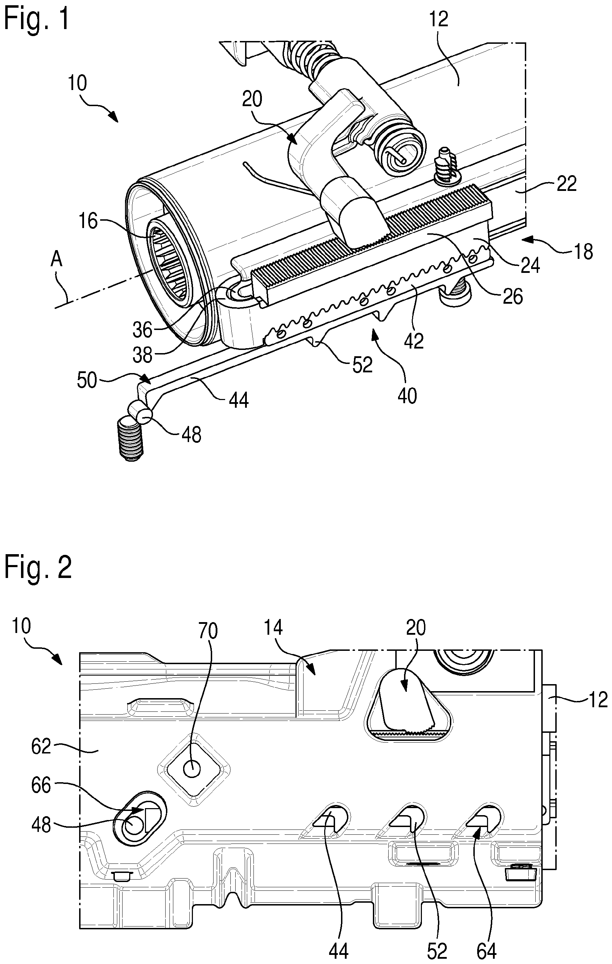

In Figuren 1 und 2 ist eine Lenksäulenbaugruppe 10 eines Fahrzeugs in einer perspektivischen Seitenansicht gezeigt, wie sie typischerweise in Kraftfahrzeugen, insbesondere Personenkraftfahrzeugen, verwendet wird.

Die Lenksäulenbaugruppe 10 umfasst ein Hülsenelement 12 sowie ein (in Figur 2 gezeigtes) fahrzeugfestes Lagerungselement 14. Das Hülsenelement 12 ist in dem Lagerungselement 14 in axialer Richtung (im Wesentlichen entlang einer Achse A) des Hülsenelements 12 verschiebbar gelagert. An dem Hülsenelement 12 ist ein Lenkrad des Kraftfahrzeugs angebracht, sodass eine axiale Position des Lenkrads durch Verschieben des Hülsenelements 12 einstellbar ist.

Das Hülsenelement 12 bildet eine Aufnahme für eine Lenkspindel 16, die um die Achse A drehbar im Hülsenelement 12 gelagert und zusammen mit diesem zur Lenkradeinstellung axial verstellbar ist.

Am Hülsenelement 12 ist außenseitig eine Energieabsorptionsvorrichtung 18 vorgesehen, die fest mit dem Hülsenelement 12 verbunden ist.

Das Lagerungselement 14 ist über einen nicht dargestellten Träger mit dem Chassis des Kraftfahrzeugs vorzugsweise höhenverstellbar verbunden und fest im Fahrzeug verbaut.

Das Lagerungselement 14 umfasst zudem ein Feststellelement 20, das derart ausgebildet ist, dass es das Hülsenelement 12 in axialer Richtung örtlich festlegen (also feststellen) kann. Genauer gesagt weist das Feststellelement 20 eine offene und eine geschlossene Stellung auf. In der offenen Stellung ist das Hülsenelement 12 für eine Verschiebung in axialer Richtung freigegeben. In der geschlossenen Stellung ist das Hülsenelement 12 hingegen in axialer Richtung örtlich festgelegt.

Das Feststellelement 20 ist beispielsweise mittels eines (nicht gezeigten) Hebels zwischen der offenen und der geschlossenen Stellung bewegbar, wobei die Standardstellung, also die Stellung während eines normalen Betriebs des Kraftfahrzeugs, die geschlossene Stellung ist.

Die Energieabsorptionsvorrichtung 18 umfasst ein erstes Absorptionselement 22 und ein zweites Absorptionselement 24 sowie einen Schiebeblock 26.

In den in den Figuren 1 bis 8 gezeigten Ausführungsformen sind die beiden Absorptionselemente 22, 24 jeweils als ein Absorptionsstreifen ausgebildet. Vorzugsweise bestehen die beiden Absorptionselemente 22, 24 jeweils aus Metall. Sie können jedoch auch eine andere, geeignete Geometrie aufweisen und/oder aus einem anderen, geeigneten Material oder Verbundmaterial bestehen. Unter "geeignet" ist dabei zu verstehen, dass Geometrie und Materialwahl erlauben, dass die Absorptionselemente 22, 24 bei einer plastischen Verformung Energie absorbieren, wie nachfolgend noch am Beispiel der Absorptionsstreifen erläutert wird.

In der gezeigten Variante ist das erste Absorptionselement 22 ein Rollreißstreifen und das zweite Absorptionselement 24 ist ein Rollstreifen. Jedoch kann jedes der beiden Absorptionselemente 22, 24 jeweils ein Rollstreifen oder ein Rollreißstreifen sein.

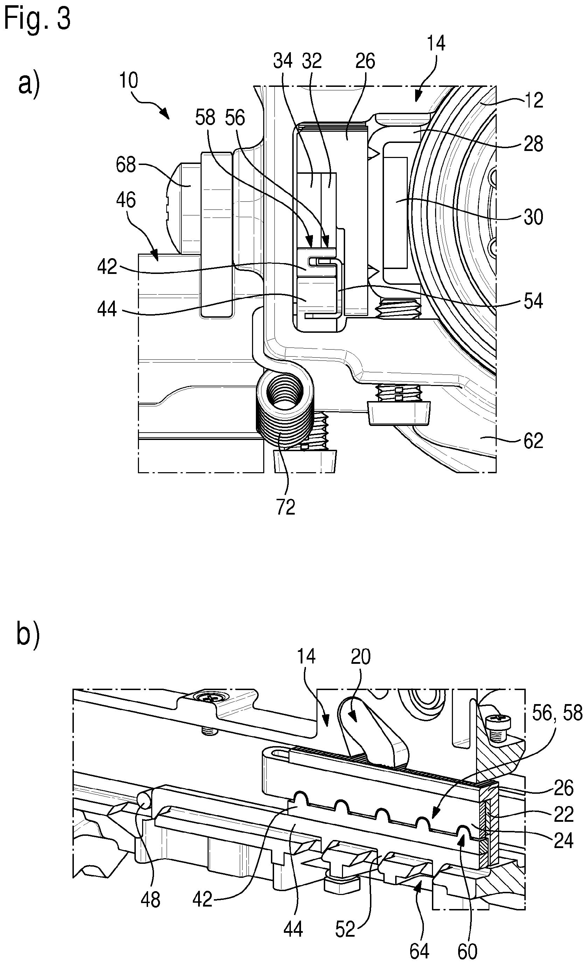

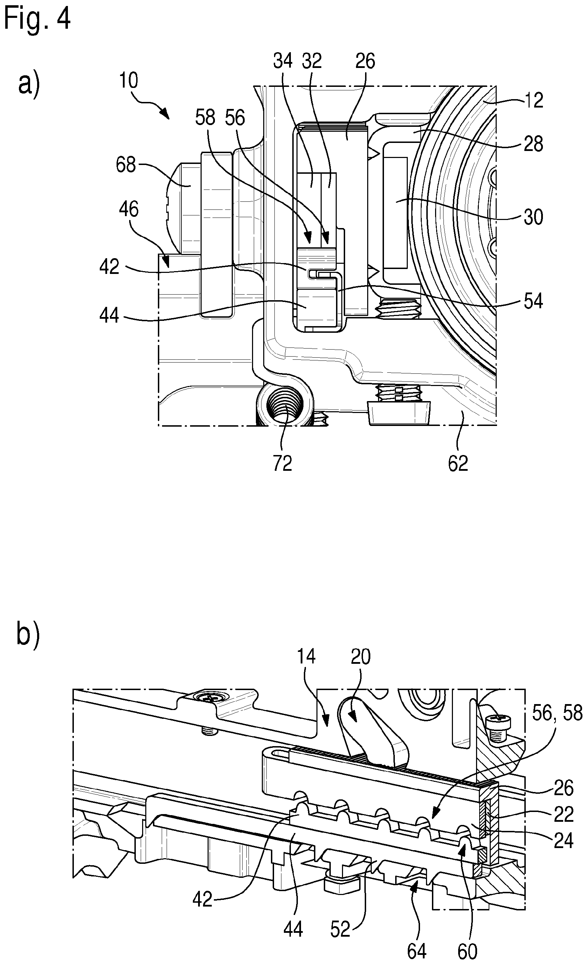

In dem gezeigten Ausführungsbeispiel weisen das erste und das zweite Absorptionselement 22, 24 jeweils im Wesentlichen die Form eines Metallbandes auf, das zu einem U beziehungsweise einem J gebogen ist. Die beiden Absorptionselemente 22, 24 weisen also jeweils einen ersten Schenkel 28, 30 und einen zweiten Schenkel 32, 34 auf (siehe z. B. Figuren 3(a) und 4(a)), wobei der erste Schenkel 28, 30 und der zweite Schenkel 32, 34 jeweils durch einen Bogenabschnitt 36, 38 miteinander verbunden sind (siehe Figur 1).

Beide Absorptionselemente 22, 24 sind jeweils mit ihrem ersten Schenkel 28, 30 fest mit dem Hülsenelement 12 verbunden. Das erste Absorptionselement 22 ist mit seinem zweiten Schenkel 32 fest mit dem Schiebeblock 26 verbunden.

In der geschlossenen Stellung des Feststellelements 20 ist der Schiebeblock 26 über das Feststellelement 20 form- und/oder reibschlüssig mit dem fahrzeugfesten Lagerungselement 14 verbunden, sodass auch der zweite Schenkel 32 des ersten Absorptionselements 22 fest mit dem Lagerungselement 14 verbunden ist.

Das Feststellelement 20 und der Schiebeblock 26 können zueinander im Wesentlichen komplementäre Verzahnungen aufweisen, sodass das Feststellelement 20 und der Schiebeblock an verschiedenen axialen Positionen des Schiebeblocks 26 miteinander verrasten können. Alternativ oder zusätzlich können das Feststellelement 20 und der Schiebeblock 26 derart gestaltet sein, dass sie an verschiedenen axialen Positionen reibschlüssig miteinander verbindbar sind.

Der zweite Schenkel 34 des zweiten Absorptionselements 24 ist mittels einer mechanischen Koppelvorrichtung 40 fest mit dem ersten Absorptionselement 22 koppelbar, genauer gesagt mit dem zweiten Schenkel 34 des ersten Absorptionselements 22.

Die Koppelvorrichtung 40 weist ein als Zahnstange ausgebildetes Koppelelement 42 und ein als Führungsteil ausgebildetes Verstellelement 44 (hier ein balkenartiges Teil) auf, das in der hier gezeigten Ausführungsform eine Keilplatte ist.

Zudem ist ein Aktuator 46 vorgesehen (siehe Figuren 3 bis 5), von dem in Figuren 1 und 2 nur ein einziehbares Halteteil 48 zu sehen ist.

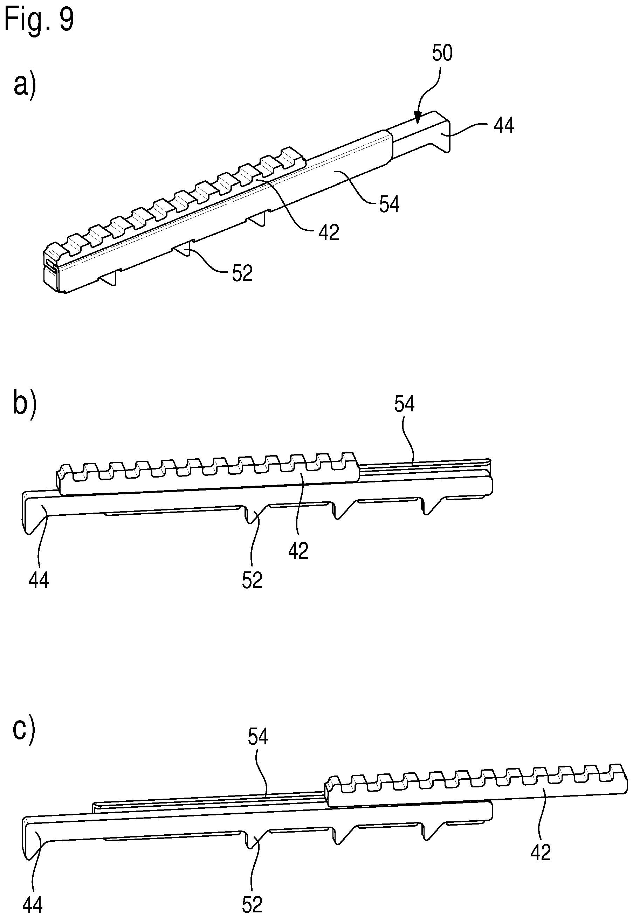

Das Verstellelement 44 weist eine im Wesentlichen ebene Oberseite 50 (siehe z. B. Figuren 1 und 9) auf, die mit dem Koppelelement 42 in Kontakt ist. An einer der Oberseite 50 entgegengesetzten Unterseite hat das Verstellelement mehrere keilförmige Ausbuchtungen 52.

Wie in Figuren 3(a) und 4(a) besonders gut zu erkennen ist, können das Koppelelement 42 und das Verstellelement 44 mittels eines Verbindungsteils 54 miteinander verbunden sein. Das langgestreckte, als Profilschiene ausgeführte Verbindungsteil 54 weist einen im Wesentlichen C-förmigen Querschnitt auf. Schenkel des Verbindungsteils 54 greifen dabei jeweils in eine seitliche Ausnehmung des Koppelelements 42 und des Verstellelements 44 ein. Dadurch ist das Koppelelement 42 relativ zum Verstellelement 44 in axialer Richtung des Hülsenelements 12 beweglich. Das Koppelelement 42 und das Verstellelement 44 sind jedoch in einer Richtung, die senkrecht auf der Oberseite 50 des Verstellelements 44 steht, fest miteinander verbunden.

In der hier gezeigten Variante weisen das erste und das zweite Absorptionselement 22, 24 an ihrer Unterseite jeweils eine Verzahnung 56, 58 auf, die im Wesentlichen komplementär zu einer Verzahnung 60 des Koppelelements 42 ist. Befinden sich die Verzahnungen 56, 58 des ersten und des zweiten Absorptionselements 22, 24 jeweils im Eingriff mit der Verzahnung 60 des Koppelelements 42 (gekoppelte Stellung der Koppelvorrichtung 40), so sind das erste und das zweite Absorptionselement 22, 24 fest miteinander gekoppelt. Da das erste Absorptionselement 22 fest am Schiebeblock 26 angebracht ist, ist das zweite Absorptionselement 24 dann auch fest mit dem Schiebeblock 26 gekoppelt. In der geschlossenen Stellung des Feststellelements 20 ist also auch das zweite Absorptionselement 24, genauer gesagt sein zweiter Schenkel 34, fest mit dem Lagerungselement 14 verbunden. Der zweite Schenkel 34 ist dann fahrzeugfest.

Figur 2 zeigt einen Abschnitt der Lenksäulenbaugruppe 10 in einer Seitenansicht, wobei hier ein in Figur 1 nicht gezeigtes Gehäuse 62 des Lagerungselements 14 dargestellt ist.

In dem Gehäuse 62 sind Ausnehmungen 64 vorgesehen, die als Langlöcher ausgebildet sind. Die Ausnehmungen 64 sind in axialer Richtung vorzugsweise hin zum (nicht dargestellten) Lenkrad geneigt. Die Ausnehmungen 64 sind derart gestaltet, dass sie die keilförmigen Ausbuchtungen 52 aufnehmen können, um Schrägführungen zu bilden.

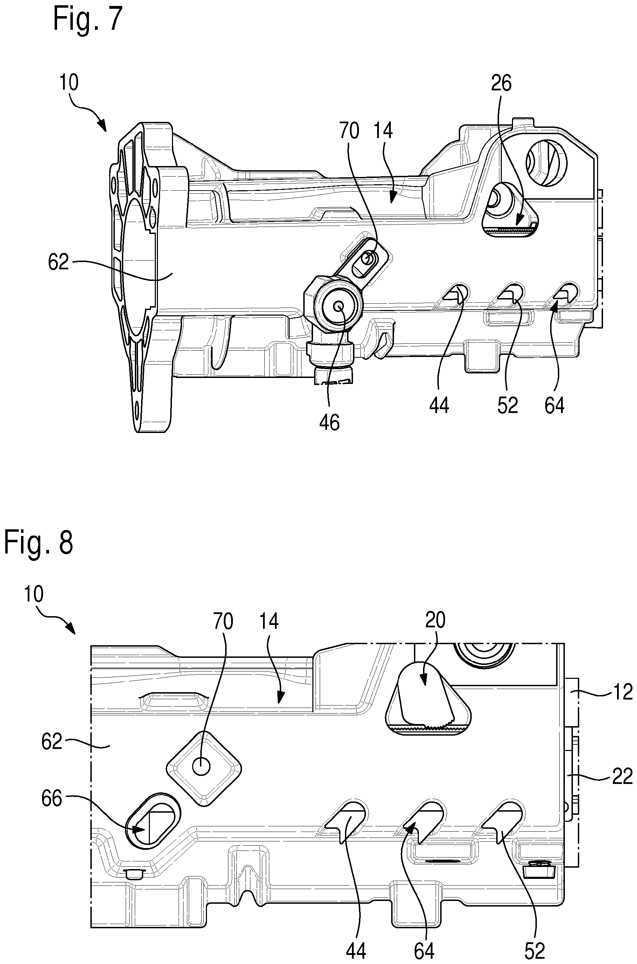

Dadurch ergeben sich insbesondere zwei verschiedene Stellungen des Verstellelements 44. In einer ersten Stellung, die in Figuren 2, 3(b), 6 und 7 gezeigt ist, liegen die keilförmigen Ausbuchtungen 52 außerhalb der Ausnehmungen 64 auf dem Gehäuse 62 des Lagerungselements 14 auf. In einer zweiten Stellung, die in Figuren 4(b) und 8 gezeigt ist, sind die keilförmigen Ausbuchtungen 52 in den Ausnehmungen 64 aufgenommen. Insbesondere sind die erste und die zweite Stellung des Verstellelements 44 derart, dass das Verstellelement 44, in axialer Richtung des Hülsenelements 12 gesehen, in der zweiten Stellung gegenüber der ersten Stellung vertikal abgesenkt ist.

Das Gehäuse 62 weist zudem eine weitere Ausnehmung 66 auf, die das Halteteil 48 des Aktuators 46 aufnehmen kann.

Im Folgenden wird die Funktionsweise der Lenksäulenbaugruppe 10 näher erläutert.

Figuren 1 bis 3 sowie 6 und 7 zeigen die Lenksäulenbaugruppe während eines normalen Betriebs des Kraftfahrzeugs.

Das Feststellelement 20 ist in der geschlossenen Stellung und die Koppelvorrichtung 40 ist in der gekoppelten Stellung. Dabei liegt eine Stirnseite des Verstellelements 44 am Halteteil 48 an, das in der in axialer Richtung vorzugsweise hin zum Lenkrad schräg angeordneten Ausnehmung 66 aufgenommen ist. Das Halteteil 48 hält also das Verstellelement 44 in der oben beschriebenen ersten Stellung, in der das Koppelelement 42 mit den beiden Absorptionselementen 22, 24 im Eingriff ist.

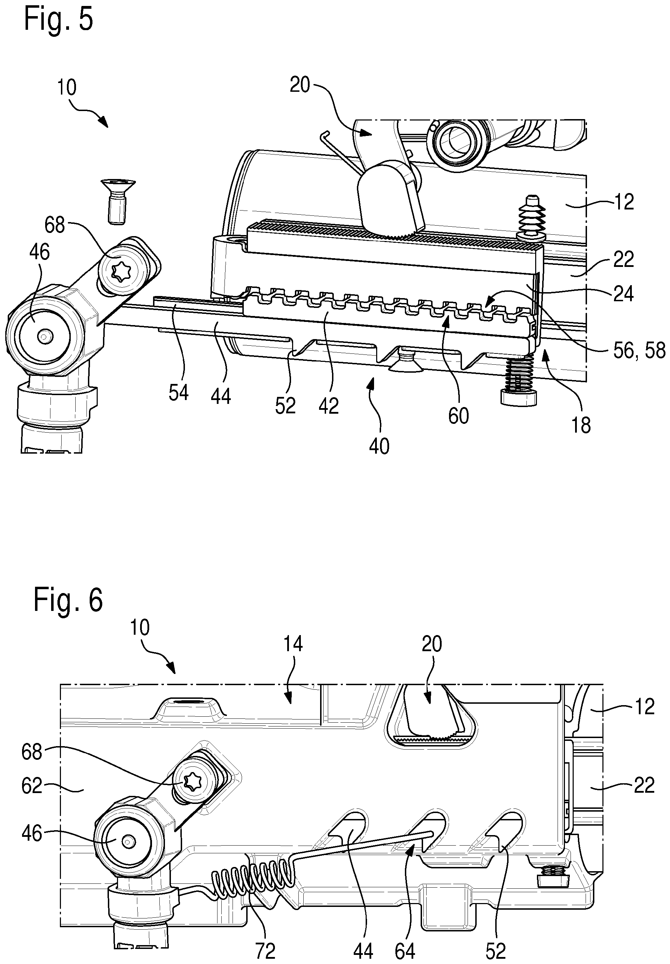

Insbesondere ist also die axiale Position des Verstellelements 44 durch das Halteteil 48 festgelegt. Um die genaue axiale Position des Verstellelements 44 einzustellen, kann bei der Montage des Aktuators 46 das Halteteil 48 innerhalb der Ausnehmung 66 bis zur gewünschten Position bewegt werden. Der Aktuator wird dann beispielsweise mittels einer Schraube 68 in einer passenden Bohrung 70 am Gehäuse 62 angebracht (siehe Figuren 6 und 7). Die axiale Position des Halteteils 48 und damit des Verstellelements 44 ist damit fixiert.

Kommt es nun zu einem Fahrzeugcrash, bei dem eine hohe Energieabsorptionsanforderung festgestellt wird, zum Beispiel weil der Fahrer nicht angeschnallt ist, so verbleibt die Koppelvorrichtung 40 in der gekoppelten Stellung.

Durch eine Krafteinwirkung auf das Lenkrad in axialer Richtung des Hülsenelements 12 wird das Hülsenelement 12 in axialer Richtung verschoben und mit ihm die ersten Schenkel 28, 30 der beiden Absorptionselemente 22, 24.

Da das Feststellelement 20 in der geschlossenen Stellung ist, sind die zweiten Schenkel 32, 34 der beiden Absorptionselemente 22, 24 über den Schiebeblock 26 fest mit dem Lagerungselement 14 verbunden, also im Wesentlichen fahrzeugfest. Der Fall, dass bei dem Fahrzeugcrash eine so große Kraft einwirkt, dass auch das Lagerungselement 14 verschoben wird, bleibt hier außer Betracht.

Durch die Relativbewegung der ersten Schenkel 28, 30 zu den zweiten Schenkeln 32, 34 werden die beiden Absorptionselemente 22, 24 plastisch verformt, wodurch sie Energie absorbieren.

Ist eines der beiden Absorptionselemente 22, 24 als Rollreißstreifen ausgebildet, so reißt dieser zusätzlich an seinem ersten Schenkel 28 bzw. 30 vom Hülsenelement 12 ab, wodurch zusätzliche Energie absorbiert wird. Es können auch beide Absorptionselemente 22, 24 als Rollreißstreifen ausgebildet sein.

Kommt es hingegen zu einem Fahrzeugcrash, bei dem eine niedrige Energieabsorptionsanforderung festgestellt wird, so wird die Koppelvorrichtung 40, wie im Folgenden beschrieben, von der gekoppelten in eine entkoppelte Stellung geschaltet.

Der Aktuator 46, der als pyrotechnischer Aktuator oder als elektrischer Aktuator ausgebildet sein kann, zieht das Halteteil 48 ein. Dadurch liegt die Stirnseite des Verstellelements 44 nicht mehr am Halteteil 48 an und kann sich in axialer Richtung des Hülsenelements 12 bewegen.

Durch die beim Fahrzeugcrash in axialer Richtung auf das Hülsenelement 12 wirkende Kraft wird auch das zweite Absorptionselement 24 mit einer Kraft in axialer Richtung beaufschlagt. Diese Kraft wird über die Verzahnung 58 des zweiten Absorptionselements 24 auf die Verzahnung 60 des Koppelements 42 übertragen. In der gezeigten Ausführungsform wird die Kraft vom Koppelelement 42 über die Verzahnung des ersten Absorptionselements 22 auf den Schiebeblock 26 übertragen. Die auf das Koppelelement 42 wirkende Kraft hat nicht nur eine Komponente in axialer Richtung, sondern auch eine zusätzliche Komponente senkrecht dazu (also im Wesentlichen in einer Richtung, die senkrecht auf der Kontaktfläche zwischen Koppelelement 42 und Verstellelement 44 steht). Diese zusätzliche Komponente der Kraft hat die Tendenz, das Koppelelement 42 von den Absorptionselementen 22, 24 zu trennen, wobei die Größe dieser Komponente hauptsächlich von einer Geometrie der Verzahnungen 56, 58, 60 sowie von den Reibungskoeffizienten der Verbindungen zwischen dem ersten Absorptionselement 22 und dem Koppelelement 42 sowie zwischen dem zweiten Absorptionselement 24 und dem Koppelelement 42 abhängt.

Durch diese Kräfte gleiten die keilförmigen Ausbuchtungen 52 entlang eines Rands der Ausnehmungen 64 in die Ausnehmungen 64 hinein und das Verstellelement 44 wird abgesenkt. Da das Koppelelement 42 außer in axialer Richtung fest mit dem Verstellelement 44 verbunden ist, wird dadurch auch das Koppelelement 42 abgesenkt. Die abgesenkte Stellung des Koppelelements ist in den Figuren 4, 5 und 8 gezeigt.

Dadurch geraten die Verzahnungen 56, 58 der Absorptionselemente außer Eingriff (entkoppelte Stellung der Koppelvorrichtung 40, siehe Figuren 4, 5 und 8) mit der Verzahnung 60 des Koppelelements 42, sodass das zweite Absorptionselement 24 nicht mehr mit dem ersten Absorptionselement 22 gekoppelt ist, insbesondere auch nicht mehr mit dem Schiebeblock 26. Der zweite Schenkel 34 des zweiten Absorptionselements ist dadurch nicht mehr fahrzeugfest und bewegt sich bei einer Verschiebung des Hülsenelements 12 mit diesem.

Der zweite Schenkel 32 des ersten Absorptionselements 22 ist hingegen weiterhin fahrzeugfest und absorbiert bei dem Fahrzeugcrash durch eine plastische Verformung und/oder ein Abreißen des ersten Schenkels 28, wie oben beschrieben, Energie. Die absorbierte Energiemenge ist dabei geringer als im vorher beschriebenen Fall, in dem beide Absorptionselemente 22, 24 Energie absorbieren.

Um das Verstellelement 44 unabhängig von der Geometrie der Verzahnungen 56, 58, 60 und den Reibungskoeffizienten zuverlässig in die zweite (abgesenkte) Stellung zu bewegen, kann ein Federelement 72 vorgesehen sein, das das Verstellelement 44 hin zur zweiten Stellung beaufschlagt (siehe Figuren 3 (a), 4(a) und 5). In diesem Fall sind das Koppelelement 42 und das Verstellelement 44 mittels des Verbindungsteils 54 wie oben beschrieben miteinander verbunden, wodurch das Federelement 72 das Koppelelement 42 hin zur entkoppelten Stellung beaufschlagt.

Wie bereits erwähnt befindet sich in einem normalen Betrieb des Kraftfahrzeugs das Feststellelement 20 in der geschlossenen Stellung und die Koppelvorrichtung 40 in der gekoppelten Stellung.

Um das Lenkrad in axialer Richtung verstellen zu können, wird das Feststellelement 20, beispielsweise mittels eines Hebels, von der geschlossenen in die offene Stellung bewegt, sodass der Schiebeblock 26 freigegeben wird und nicht mehr fahrzeugfest ist.

Die Koppelvorrichtung 40 verbleibt dabei in der gekoppelten Stellung, sodass die beiden Absorptionselemente 22, 24 und der Schiebeblock 26 fest miteinander verbunden sind.

Bei einer Verschiebung des Hülsenelements 12 in axialer Richtung folgen die beiden Absorptionselemente 22, 24 und der Schiebeblock 26 den Bewegungen des Hülsenelements 12, ohne dass die die beiden Absorptionselemente plastisch verformt werden. Dies ist möglich, da das Koppelelement 42 über das Verbindungsteil 54 in axialer Richtung beweglich mit dem in der gekoppelten Stellung fahrzeugfesten Verstellelement 44 verbunden ist. Dadurch kann das Koppelelement 42 den Bewegungen der Absorptionselemente 22, 24 in axialer Richtung folgen, solange das Feststellelement 20 in der offenen Stellung ist.

Verschiedene, aus der Verstellung des Lenkrads resultierende Positionen des Koppelelements 42 gegenüber dem Verstellelement 44 sind in den Figuren 9 (a) bis (c) gezeigt. Figur 9 (a) zeigt den Fall, dass sich das Lenkrad, in Bezug auf die axiale Richtung, in einer mittigen Position befindet. Die Figuren 9 (b) und (c) zeigen die Fälle, in denen das Lenkrad in Bezug auf die axiale Richtung vom Fahrer weg beziehungsweise zum Fahrer hin verstellt ist.

## Patentansprüche

1. Lenksäulenbaugruppe (10) für ein Kraftfahrzeug, mit einem fahrzeugfesten Lagerungselement (14) und einem im Lagerungselement (14) aufgenommenen Hülsenelement (12), das zur Einstellung der Lenksäulenbaugruppe (10) in axialer Richtung in dem Lagerungselement (14) verschiebbar gelagert ist,
einer Energieabsorptionsvorrichtung (18), die fest mit dem Lagerungselement (14) koppelbar und mit dem Hülsenelement (12) fest verbunden ist, wobei die Energieabsorptionsvorrichtung (18) im Falle eines Fahrzeugcrashs infolge der Längsverschiebung des Hülsenelements (12) verformt wird und dabei einen Teil der Bewegungsenergie des Hülsenelements (12) absorbiert,
einem Feststellelement (20), das eine offene und eine geschlossene Stellung aufweist, wobei das Feststellelement (20) in der offenen Stellung eine Verstellung des Hülsenelements (12) erlaubt und es in der geschlossenen Stellung örtlich festlegt,
einer Koppelvorrichtung (40) mit einem Koppelelement (42), die eine gekoppelte Stellung und eine entkoppelte Stellung aufweist,
wobei die Energieabsorptionsvorrichtung (18) wenigstens ein erstes Absorptionselement (22) und ein zweites Absorptionselement (24) umfasst, die jeweils dazu ausgebildet sind, sich bei einem Fahrzeugcrash durch Relativbewegung des Hülsenelements (12) zum Lagerungselement (14) plastisch zu verformen,
wobei in der gekoppelten Stellung der Koppelvorrichtung (40) das erste Absorptionselement (22) über das Koppelelement (42) fest mit dem zweiten Absorptionselement (24) gekoppelt ist,
wobei in der geschlossenen Stellung des Feststellelements (20) wenigstens das erste Absorptionselement (22) fest mit dem Lagerungselement (14) gekoppelt ist und in der offenen Stellung das Koppelelement (42) in axialer Richtung gemeinsam mit dem Hülsenelement (12) beweglich ist, und
wobei sich während eines normalen Betriebs des Kraftfahrzeugs das Feststellelement (20) in der geschlossenen Stellung und die Koppelvorrichtung (40) in der gekoppelten Stellung befindet,
**dadurch gekennzeichnet, dass** die Koppelvorrichtung (40) ein Verstellelement (44) umfasst, das eine erste und eine zweite Stellung aufweist, wobei das Verstellelement (44) in der ersten Stellung das Koppelelement (42) in der gekoppelten Stellung hält und in der zweiten Stellung das Koppelelement (42) in der entkoppelten Stellung hält,
wobei das Verstellelement (44) ein Führungsteil ist, das eine als Längsführung ausgebildete Oberseite (50) aufweist, die mit dem Koppelelement (42) in Kontakt ist, und das keilförmige Ausbuchtungen (52) an einer der Oberseite (50) entgegengesetzten Unterseite aufweist.

2. Lenksäulenbaugruppe (10) nach Anspruch 1, **dadurch gekennzeichnet, dass** das Koppelelement (42) eine Zahnstange ist.

3. Lenksäulenbaugruppe (10) nach Anspruch 2, **dadurch gekennzeichnet, dass** das erste und/oder das zweite Absorptionselement (22, 24) eine zur Verzahnung (60) der Zahnstange im Wesentlichen komplementäre Verzahnung (56, 58) aufweisen/aufweist.

4. Lenksäulenbaugruppe (10) nach einem der vorhergehenden Ansprüche, **dadurch gekennzeichnet, dass** die Energieabsorptionsvorrichtung (18) wenigstens einen Schiebeblock (26) umfasst, der mit dem ersten Absorptionselement (22) fest verbunden ist, wobei der Schiebeblock (26) in der geschlossenen Stellung des Feststellelements (20) fest mit dem Lagerungselement (14) gekoppelt ist und in der offenen Stellung des Feststellelements (20) vom Lagerungselement (14) entkoppelt ist.

5. Lenksäulenbaugruppe (10) nach den Ansprüchen 2 und 4, **dadurch gekennzeichnet, dass** der Schiebeblock (26) und das zweite Absorptionselement (24) jeweils eine zur Verzahnung (60) der Zahnstange (42) im Wesentlichen komplementäre Verzahnung aufweisen.

6. Lenksäulenbaugruppe (10) nach Anspruch 4 oder 5, **dadurch gekennzeichnet, dass** der Schiebeblock (26) in der geschlossenen Stellung des Feststellelements (20) form- und/oder reibschlüssig mit dem Feststellelement (20) verbunden ist.

7. Lenksäulenbaugruppe (10) nach Anspruch 6, **dadurch gekennzeichnet, dass** das Verstellelement (44) eine Keilplatte ist.

8. Lenksäulenbaugruppe (10) nach einem der vorhergehenden Ansprüche, **dadurch gekennzeichnet, dass** das Verstellelement (44) und das Koppelelement (42) mittels eines Verbindungsteils (54) derart verbunden sind, dass das Koppelelement (42) in axialer Richtung des Hülsenelements (12) relativ zum Verstellelement (44) beweglich ist, insbesondere wobei das Koppelelement (42) und das Verstellelement (44) in Richtungen senkrecht zur axialen Richtung relativ zueinander unbeweglich sind.

9. Lenksäulenbaugruppe (10) nach einem der vorhergehenden Ansprüche, **dadurch gekennzeichnet, dass** im Lagerungselement (14) Ausnehmungen (64) vorgesehen sind, insbesondere Langlöcher, die derart gestaltet sind, dass sie die keilförmigen Ausbuchtungen (52) des Führungsteils (44) aufnehmen können.

10. Lenksäulenbaugruppe (10) nach Anspruch 9, **dadurch gekennzeichnet, dass** die Ausnehmungen (64), in axialer Richtung des Hülsenelements (12) schräg angeordnet sind, vorzugsweise jeweils hin zu einem Lenkrad schräg angeordnet.

11. Lenksäulenbaugruppe (10) nach Anspruch 9 oder 10, **dadurch gekennzeichnet, dass** in der entkoppelten Stellung der Koppelvorrichtung (40) die keilförmigen Ausbuchtungen (52) des Führungsteils (44) in den Ausnehmungen (64) aufgenommen sind.

12. Lenksäulenbaugruppe (10) nach einem der vorhergehenden Ansprüche, **dadurch gekennzeichnet, dass** die Koppelvorrichtung (40) einen pyrotechnischen und/oder elektrischen Aktuator (46) hat, der dazu ausgebildet ist, im oder vor dem Crashfall die Koppelvorrichtung (40) von der gekoppelten Stellung in die entkoppelte Stellung zu schalten.

13. Lenksäulenbaugruppe (10) nach Anspruch 12, **dadurch gekennzeichnet, dass** der Aktuator (46) ein verschiebbares Halteteil (48) aufweist, wobei das Lagerungselement (14) eine Ausnehmung (66) aufweist, die das Halteteil (48) aufnehmen kann, insbesondere wobei das Halteteil (48) in einer ausgefahrenen Stellung das Verstellelement (44) in der ersten Stellung hält und der Aktuator (46) dazu ausgebildet ist, das Halteteil (48) im oder vor dem Crashfall einzuziehen.

14. Lenksäulenbaugruppe (10) nach einem der vorhergehenden Ansprüche, **dadurch gekennzeichnet, dass** ein Federelement (72) vorgesehen ist, das die Koppelvorrichtung (40) hin zur entkoppelten Stellung beaufschlagt.

## Claims

1. Steering column module (1) for a motor vehicle, having
a mounting element (14) which is fixed to the vehicle and a sleeve element (12) which is received in the mounting element (14) and for setting the steering column module (10) is mounted so as to be displaceable in the axial direction in the mounting element (14);
an energy absorption device (18) which is able to be fixedly coupled to the mounting element (14) and is fixedly connected to the sleeve element (12), wherein the energy absorption device (18) in the event of a vehicle crash is deformed as a result of the longitudinal displacement of the sleeve element (12) and herein absorbs part of the kinetic energy of the sleeve element (12);
a locking element (20) which has an open position and a closed position, wherein the locking element (20) in the open position permits an adjustment of the sleeve element (12) and in the closed position establishes the physical position of said sleeve element (12);
a coupling device (40) with a coupling element (42) which has a coupled position and a decoupled position;
wherein the energy absorption device (18) has at least a first absorption element (22) and a second absorption element (24) which in the event of a vehicle crash are in each case configured so as to plastically deform on account of a relative movement of the sleeve element (12) in relation to the mounting element (14);
wherein, in the coupled position of the coupling device (40), the first absorption element (22) is fixedly coupled to the second absorption element (24) by way of the coupling element (42);
wherein, in the closed position of the locking element (20), at least the first absorption element (22) is fixedly coupled to the mounting element (14) and, in the open position, the coupling element (42) conjointly with the sleeve element (12) is movable in the axial direction; and
wherein, during a normal operation of the motor vehicle, the locking element (20) is situated in the closed position and the coupling device (40) is situated in the coupled position;
**characterized in that**
the coupling device (40) comprises an adjustment element (44) which has a first position and a second position, wherein the adjustment element (44) in the first position holds the coupling element (42) in the coupled position, and in the second position holds the coupling element (42) in the decoupled position;
wherein the adjustment element (44) is a guide part which has an upper side (50) that is configured as a longitudinal guide and is in contact with the coupling element (42) and on a lower side opposite the upper side (50) has wedge-shaped convexities (52) .

2. Steering column module (10) according to Claim 1, **characterized in that** the coupling element (42) is a rack.

3. Steering column module (10) according to Claim 2, **characterized in that** the first absorption element (22) and/or the second absorption element (24) have/has a toothing (56, 58) which is substantially complementary to the toothing (60) of the rack.

4. Steering column module (10) according to one of the preceding claims, **characterized in that** the energy absorption device (18) comprises at least one sliding block (26) which is fixedly connected to the first absorption element (22), wherein the sliding block (26) in the closed position of the locking element (20) is fixedly coupled to the mounting element (14) and in the open position of the locking element (20) is decoupled from the mounting element (14) .

5. Steering column module (10) according to Claims 2 and 4, **characterized in that** the sliding block (26) and the second absorption element (24) have in each case a toothing which is substantially complementary to the toothing (60) of the rack (42).

6. Steering column module (10) according to Claim 4 or 5, **characterized in that** the sliding block (26) in the closed position of the locking element (20) is connected in a form-fitting and/or friction-fitting manner to the locking element (20).

7. Steering column module (10) according to Claim 6, **characterized in that** the adjustment element (44) is a wedge plate.

8. Steering column module (10) according to one of the preceding claims, **characterized in that** the adjustment element (44) and the coupling element (42) by means of a connection part (54) are connected in such a manner that the coupling element (42) is movable relative to the adjustment element (44) in the axial direction of the sleeve element (12), in particular wherein the coupling element (42) and the adjustment element (44) are immovable relative to one another in directions perpendicular to the axial direction.

9. Steering column module (10) according to one of the preceding claims, **characterized in that** clearances (64), in particular slots, which are designed in such a manner that said clearances (64) can receive the wedge-shaped convexities (52) of the guide part (44) are provided in the mounting element (14).

10. Steering column module (10) according to Claim 9, **characterized in that** the clearances (64), in the axial direction of the sleeve element (12), are disposed so as to be oblique, preferably disposed so as to be in each case oblique toward a steering wheel.

11. Steering column module (10) according to Claim 9 or 10, **characterized in that**, in the decoupled position of the coupling device (40), the wedge-shaped convexities (52) of the guide part (44) are received in the clearances (64).

12. Steering column module (10) according to one of the preceding claims, **characterized in that** the coupling device (40) has a pyrotechnic and/or electric actuator (46) which in the event of a crash, or prior thereto, is configured for switching the coupling device (40) from the coupled position to the decoupled position.

13. Steering column module (10) according to Claim 12, **characterized in that** the actuator (46) has a displaceable holding part (48), wherein the mounting element (14) has a clearance (66) which can receive the holding part (48), in particular wherein the holding part (48) in a deployed position holds the adjustment element (44) in the first position, and the actuator (46) is configured for retracting the holding part (48) in the event of a crash, or prior thereto.

14. Steering column module (10) according to one of the preceding claims, **characterized in that** a spring element (72) which impinges the coupling device (40) towards the decoupled position is provided.

## Revendications

1. Ensemble formant colonne de direction (10) destiné à un véhicule automobile, ledit ensemble comprenant
un élément formant palier (14) fixé au véhicule et un élément formant manchon (12) reçu dans l'élément formant palier (14) et monté dans l'élément formant palier (14) de manière coulissante dans la direction axiale pour régler l'ensemble formant colonne de direction (10),
un dispositif d'absorption d'énergie (18) qui peut être accouplé de manière fixe à l'élément formant palier (14) et qui est relié de manière fixe à l'élément formant manchon (12), le dispositif d'absorption d'énergie (18) étant déformé en cas de collision de véhicule à la suite du déplacement longitudinal de l'élément formant manchon (12) et absorbant donc une partie de l'énergie cinétique de l'élément formant manchon (12),
un élément d'immobilisation (20) qui présente une position ouverte et une position fermée, l'élément d'immobilisation (20) permettant dans la position ouverte le réglage de l'élément formant manchon (12) et l'immobilisant localement dans position fermée,
un dispositif d'accouplement (40) comprenant un élément d'accouplement (42) qui présente une position accouplée et une position désaccouplée,
le dispositif d'absorption d'énergie (18) comprenant au moins un premier élément d'absorption (22) et un deuxième élément d'absorption (24) qui sont chacun conçus pour se déformer plastiquement lors d'un accident de véhicule par déplacement de l'élément formant manchon (12) par rapport à l'élément formant palier (14),
dans la position accouplée du dispositif d'accouplement (40), le premier élément d'absorption (22) étant accouplé de manière fixe au deuxième élément d'absorption (24) par le biais de l'élément d'accouplement (42),
dans la position fermée de l'élément d'immobilisation (20), au moins le premier élément d'absorption (22) étant accouplé de manière fixe à l'élément formant palier (14) et dans la position ouverte l'élément d'accouplement (42) étant mobile dans la direction axiale conjointement avec l'élément formant manchon (12), et
pendant le fonctionnement normal du véhicule automobile, l'élément d'immobilisation (20) étant en position fermée et le dispositif d'accouplement (40) étant en position accouplée,
**caractérisé en ce que** le dispositif d'accouplement (40) comprend un élément de réglage (44) qui présente une première position et une deuxième position, l'élément de réglage (44) maintenant, dans la première position, l'élément d'accouplement (42) dans la position accouplée et maintenant, dans la deuxième position, l'élément d'accouplement (42) dans la position désaccouplée,
l'élément de réglage (44) comportant une partie de guidage qui comporte un côté supérieur (50), conçu comme un guide longitudinal et en contact avec l'élément d'accouplement (42), et qui comporte des renflements (52) en forme de coin sur un côté inférieur opposé au côté supérieur (50).

2. Ensemble formant colonne de direction (10) selon la revendication 1, **caractérisé en ce que** l'élément d'accouplement (42) est une crémaillère.

3. Ensemble formant colonne de direction (10) selon la revendication 2, **caractérisé en ce que** le premier et/ou le deuxième élément d'absorption (22, 24) comportent une denture (56, 58) qui est sensiblement complémentaire de la denture (60) de la crémaillère.

4. Ensemble formant colonne de direction (10) selon l'une des revendications précédentes, **caractérisé en ce que** le dispositif d'absorption d'énergie (18) comprend au moins un bloc coulissant (26) qui est relié de manière fixe au premier élément d'absorption (22), le bloc coulissant (26) étant accouplé de manière fixe à l'élément formant palier (14) dans la position fermée de l'élément d'immobilisation (20) et étant désaccouplée de l'élément formant palier (14) dans la position ouverte de l'élément d'immobilisation (20).

5. Ensemble formant colonne de direction (10) selon les revendications 2 et 4, **caractérisé en ce que** le bloc coulissant (26) et le deuxième élément d'absorption (24) comportent chacun une denture sensiblement complémentaire de la denture (60) de la crémaillère (42).

6. Ensemble formant colonne de direction (10) selon la revendication 4 ou 5, **caractérisé en ce que**, dans la position fermée de l'élément d'immobilisation (20), le bloc coulissant (26) est relié par complémentarité de formes et/ou par friction à l'élément d'immobilisation (20) .

7. Ensemble formant colonne de direction (10) selon la revendication 6, **caractérisé en ce que** l'élément de réglage (44) est une plaque en forme de coin.

8. Ensemble formant colonne de direction (10) selon l'une des revendications précédentes, **caractérisé en ce que** l'élément de réglage (44) et l'élément d'accouplement (42) sont reliés au moyen d'un élément de liaison (54) de telle sorte que l'élément d'accouplement (42) est mobile dans la direction axiale de l'élément formant manchon (12) par rapport à l'élément de réglage (44), en particulier l'élément d'accouplement (42) et l'élément de réglage (44) étant immobiles l'un par rapport à l'autre dans des directions perpendiculaires à la direction axiale.

9. Ensemble formant colonne de direction (10) selon l'une des revendications précédentes, **caractérisé en ce que** des évidements (64) sont ménagés dans l'élément formant palier (14), en particulier des trous oblongs qui sont conçus de façon à pouvoir recevoir les renflements (52) en forme de coin de l'élément de guidage (44).

10. Ensemble formant colonne de direction (10) selon la revendication 9, **caractérisé en ce que** les évidements (64) sont chacun disposés obliquement dans la direction axiale de l'élément formant manchon (12), de préférence obliquement en direction d'un volant.

11. Ensemble formant colonne de direction (10) selon la revendication 9 ou 10, **caractérisé en ce que**, dans la position désaccouplée du dispositif d'accouplement (40), les renflements (52) en forme de coin de l'élément de guidage (44) sont reçus dans les évidements (64).

12. Ensemble formant colonne de direction (10) selon l'une des revendications précédentes, **caractérisé en ce que** le dispositif d'accouplement (40) comporte un actionneur pyrotechnique et/ou électrique (46) qui est conçu pour faire passer le dispositif d'accouplement (40) de la position accouplée dans la position désaccouplée pendant ou avant la collision.

13. Ensemble formant colonne de direction (10) selon la revendication 12, **caractérisé en ce que** l'actionneur (46) comporte un élément de retenue coulissant (48), l'élément formant palier (14) comporte un évidement (66) qui peut recevoir l'élément de retenue (48), notamment l'élément de retenue (48) retenant dans une position déployée l'élément de réglage (44) dans la première position et l'actionneur (46) étant conçu pour rétracter l'élément de retenue (48) pendant ou avant la collision.

14. Ensemble formant colonne de direction (10) selon l'une des revendications précédentes, **caractérisé en ce qu'**un élément à ressort (72) est prévu qui agit sur le dispositif d'accouplement (40) en direction de la position désaccouplée.
